# EUROPÄISCHE PATENTSCHRIFT

(11) **EP 0 368 202 B1**
(45) Veröffentlichungstag und Bekanntmachung des Hinweises auf die Patenterteilung: **16.02.1994**
(21) Anmeldenummer: 89120496.8
(22) Anmeldetag: 06.11.1989
(51) Int. Cl.: G02F 1/01, G02F 1/1337, B05D 1/40

(54) **Verfahren zum Beschichten einer Substratplatte für einen flachenAnzeigeschirm**
Method for coating a substrate matrix for a flat display
Procédé pour couvrir un substrat pour un écran d'affichage plan

(30) Priorität: 08.11.1988 DE 3837827
(43) Veröffentlichungstag der Anmeldung: 16.05.1990
(73) Patentinhaber: Nokia (Deutschland) GmbH, 75175 Pforzheim (DE)
(72) Erfinder: Wirsig, Hansjörg, D-7014 Kornwestheim (DE)

(56) Entgegenhaltungen:
- CH-A- 663 912
- CH-B- 624 529
- GB-A- 2 142 256
- PATENT ABSTRACTS OF JAPAN, unexamined applications, Sektion P, Band 11, Nr. 256, 20. August 1987 THE PATENT OFFICE JAPANESE GOVERNMENT, Seite 24 P 607
- PATENT ABSTRACTS OF JAPAN, unexamined applications, Sektion P, Band 11, Nr. 177, 6. Juni 1987 THE PATENT OFFICE JAPANESE GOVERNMENT, Seite 63 P 583

## Beschreibung

### Technisches Gebiet

Die Erfindung betrifft ein Verfahren zum Aufbringen einer dünnen Schicht auf eine Substratplatte für einen flachen Anzeigeschirm, insbesondere für ein Flüssigkristalldisplay.

### Stand der Technik

Dünne Schichten auf Substratplatten für Anzeigeschirme werden häufig dadurch hergestellt, daß die aufzubringenden Substanz in flüssiger, das heißt gelöst, geschmolzen oder dispergiert, auf die Substratplatte aufgegeben wird, was zum Beispiel durch Tauchen, Sprühen oder Drucken erfolgt. Zum Aufbringen von Schichten sehr gleichmäßiger Dicke hat sich insbesondere das sogenannte Spincoating-Verfahren bewährt.

Hierbei wird die Substratplatte auf einem waagerechten Drehteller so befestigt, daß ihr Schwerpunkt im wesentlichen auf der Drehachse des Tellers liegt. Der Teller wird dann in Rotation versetzt und die aufzubringende Flüssigkeit zentrisch auf die Oberfläche der sich drehenden Substratplatte aufgespritzt oder aufgesprüht. Durch Einhaltung besonderer Rotationsbedingungen wird dann die aufzubringende Schicht auf der Oberfläche der Substratplatte ausgebildet. Typischerweise wird nach dem Aufgeben der Flüssigkeit die Substratplatte einer niedrigen Drehzahl ausgesetzt, damit sich die zentrisch auf der Substratplatte aufgebrachte Flüssigkeitsmenge gleichmäßig über die gesamte Oberfläche der Substratplatte verteilt. Diese, während des Verteilens der Flüssigkeit vorherrschende Drehzahl kann gleich oder größer derjenigen Drehzahl des Tellers sein, die während des Aufbringens der Flüssigkeit auf die Substratplatte vorgeherrscht hat. Nach dem Verteilen der Flüssigkeit auf der Oberfläche der Substratplatte wird dann die Drehzahl gesteigert, typischerweise auf 1500 bis 3000 U/min abhängig von der gewünschten Schichtdicke. Überflüssige Flüssigkeit wird also durch Abschleudern entfernt. Der so erzielte Flüssigkeitsfilm der Substanz wird dann getrocknet und ausgehärtet, zum Beispiel durch Erhitzen oder Belichten. Eine in diesem Absatz beschriebene Verfahrensführung mitsamt dem angegeben Aufbau der Spincoating-Vorrichtung ist weitgehend aus CH-A5-663912 bekannt. Abweichend von den in diesem Absatz angegebenen allgemeinen Rotationsbedingungen werden in dieser Schrift besondere Rotationsmoden angegeben, die - nach dem die Flüssigkeit auf die rotierende Scheibe aufgegeben worden ist - eingehalten werden müssen, um auf einem rechteckigen Substrat eine gleichmäßige Schichtdicke zu erzeugen.

Aus CH-B 5-624529 ist ein Beschichtungsverfahren bekannt, bei dem entweder die Beschichtungssubstanz in Gelform unter Einsatz einer Rakel flächig und mit homogener Schichtdicke auf das Substrat aufgebracht wird oder die Beschichtungssubstanz mittels eines Pinsels oder eine Sprühpistole flächig und mit inhomogener Schichtdicke auf das Substrat aufgebracht wird, bevor das so behandelte und am Rand einer kegelförmig ausgebildeten Scheibenkassette angeordnete Substrat zur Einstellung einer homogenen Schichtdicke mittels der Scheibenkassette in Rotation versetzt wird. Der Abstand zwischen der Drehachse der Scheibenkassette und dem Anordnungspunkt des Substrats auf der Scheibenkassette ist fünf- bis sechsmal größer als die geometrische Abmessung der Substratplatte.

Es hat sich jedoch herausgestellt, daß es mittels der bekannten Verfahren bei Verwendung großer Substratplatten schwierig ist, die gewünschte Verteilung der eingebrachten Flüssigkeit über die ganze Substratfläche zu gewährleisten. Die Flüssigkeit muß hierzu relativ niedrige Viskosität aufweisen, damit sie beim Verteilen bis zu den Rändern hin nicht zu sehr eindickt und das Erhöhen der Drehzahl muß gemäß einem genau einzuhaltenden optimierten Ablauf erfolgen.

Der Erfindung liegt die Aufgabe zugrunde ein Spincoating-Verfahren zum Beschichten der Substratplatte eines Anzeigeschirms anzugeben, mit dem es sicher möglich ist, die aufgebrachte Flüssigkeit über die gesamte Substratoberfläche zu verteilen, bevor zum Abschleudern die Drehzahl stark erhöht wird.

### Darstellung der Erfindung

Diese Aufgabe wird durch die Merkmalsangabe gemäß Anspruch 1 bzw. 2 gelöst. Eine vorteilhafte Ausgestaltung der Erfindung ist Anspruch 3 entnehmbar.

Das erfindungsgemäße Verfahren zeichnet sich dadurch aus, daß vor dem Schleudern die gesamte Substratoberfläche benetzt wird, sei dies durch Tauchen, durch Aufgießen oder, vorzugsweise, durch Aufsprühen. Vorzugsweise erfolgt das Benetzen bereits mit der schichtbildenden Flüssigkeit, jedoch ist es auch möglich, zunächst die gesamte Substratoberfläche mit einer anderen Flüssigkeit zu benetzen und erst dann die schichtbildende Flüssigkeit aufzubringen. Dies insbesondere dann, wenn die Substratoberfläche zunächst gewaschen werden soll.

Wie oben erwähnt, ist es für sich bekannt, eine schichtbildende Flüssigkeit auf eine Substratplatte durch Tauchen oder Sprühen aufzubringen. Bei den bekannten Verfahren wird zugleich mit dem Tauchvorgang oder dem Aufsprühvorgang die gewünschte Schichtdicke eingestellt. Beim erfindungsgemäßen Verfahren ist es dagegen völlig unkritisch, welche Schichtdicke beim Tauchen, Aufsprühen oder auch Aufgießen erzielt wird, da die Schichtdicke nicht durch diesen Verfahrensschritt eingestellt wird, sondern erst durch das Schleudern. Wichtig ist lediglich, daß die gesamte Fläche, auf der eine Schicht gebildet werden soll, benetzt wird.

Es ist auch für sich bekannt, Substratplatten vor dem Beschichten zu waschen. Werden die Substrate nach einem solchen Waschvorgang in eine herkömmliche Spincoat-Vorrichtung gegeben, sind sie trocken, bevor sich der Teller zu drehen beginnt und die schichtbildende Flüssigkeit aufgebracht wird. Beim erfindungsgemäßen Verfahren ist es dagegen zwingend erforderlich, daß dann, wenn das Aufbringen der schichtbildenden Substanz wie herkömmlich erfolgt, dies zu einem Zeitpunkt geschieht, zu dem die benetzende Substanz noch nicht getrocknet ist.

Eine Spincoat-Vorrichtung zum Ausführen des Verfahrens weist demgemäß entweder eine Aufgebeeinrichtung auf, die so ausgebildet ist, daß durch sie die gesamte Substratoberfläche durch die schichtbildende Flüssigkeit vor dem Schleudern benetzt wird, oder sie verfügt über eine Benetzeinrichtung, die für ein solches Benetzen durch eine Fremdflüssigkeit sorgt.

Vorzugsweise wird die filmbildende Flüssigkeit oder die benetzende Flüssigkeit mit einer Sprüheinrichtung aufgebracht. Dies, weil sich eine derartige Einrichtung einfach in einer herkömmlichen Spincoat-Vorrichtung anordnen läßt.

### KURZE BESCHREIBUNG DER ZEICHNUNGEN

- Fig. 1: schematische perspektivische Darstellung eines Drehtellers mit auf diesem befestigter Substratplatte und einer oberhalb des Tellers befestigten Sprüheinrichtung, die gerade tätig ist; und
- Fig. 2: eine Darstellung gem. Fig. 1 jedoch mit eingeschaltetem Drehteller und ausgeschalteter Sprüheinrichtung.

### WEGE ZUM AUSFÜHREN DER ERFINDUNG

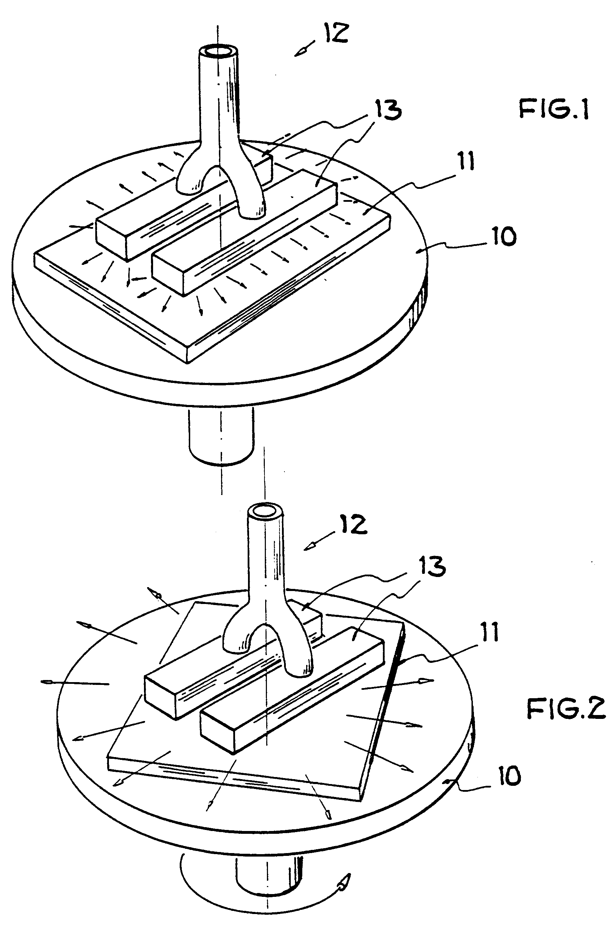

Auf dem Drehteller 10 in der Darstellung gemäß den Fig. 1 und 2 ist eine Substratplatte 11 in herkömmlicher Weise befestigt, also vorzugsweise dadurch, daß an ihre Unterseite Unterdruck gelegt ist. Die Platte 11 ist so angeordnet, daß ihr Schwerpunkt im wesentlichen mit der Drehachse des Drehtellers 10 zusammenfällt. Über dem Drehteller 10 ist eine Sprüheinrichtung 12 angeordnet, die zwei längliche, zueinander parallele Sprühdüsen 13 aufweist. Die Abmessung und die Anordnung der Düsen ist so gewählt, daß sie dazu in der Lage sind, die gesamte Oberfläche der unter ihnen liegenden Substratplatte 11 zu besprühen. Die Sprüheinrichtung 12 ist vorzugsweise leicht austauschbar an der Gesamtvorrichtung befestigt, damit die Geometrie ihrer Sprühdüsenanordnung leicht an unterschiedliche Substratformen und Substratgrößen anpaßbar ist. Es muß immer gewährleistet sein, daß die gesamte Substratoberfläche besprüht wird. Andererseits ist aus Materialersparnisgründen darauf zu achten, daß nicht zuviel Flüssigkeit neben die Substratoberfläche gesprüht wird.

Die durch die Sprühdüsen 13 aufgesprühte Flüssigkeit ist z. B. eine Lösung eines Isolierschichtmaterials, z. B. Liquicoat-SiP der Firma Merck oder die Lösung eines Orientierungsschichtmaterials, welche Lösung z. B. mit dem Liquicoat-Imidkit, ebenfalls von Merck, herstellbar ist.

Sobald die gesamte Oberfläche der Substratplatte 11 benetzt ist, wird der Sprühvorgang beendet und der Drehteller 10 beginnt zu rotieren, wie in Fig. 2 dargestellt. Die Drehzahl kann dabei ohne Einhalten eines vorgegebenen Ablaufes so schnell wie möglich auf die gewünschte Enddrehzahl, z. B. 2000 U/min hochgefahren werden. Dies, weil nicht mehr, wie beim herkömmlichen Spincoat-Verfahren, darauf zu achten ist, daß ein nur zentrisch aufgespritztes oder aufgesprühtes Flüssigkeitsvolumen zunächst in einer Rotationsbewegung über die gesamte Substratoberfläche zu verteilen ist.

Dadurch, daß die Drehzahl so schnell wie möglich hochgefahren werden kann, wird Zeit gespart. Außerdem ist es durch das anfängliche ganzflächige Benetzen absolut sicher, daß sich die gewünschte Schicht auf der gesamten Substratoberfläche ausbildet.

Ist die Sprüheinrichtung so ausgebildet, daß gewährleistet ist, daß unmittelbar durch sie im wesentlichen jeder Punkt der Oberfläche des Substrates 11 besprüht wird, kann der Sprühvorgang auch erfolgen, wenn sich das Substrat bereits dreht. Auch dann ist sicher, daß die gesamte Fläche benetzt wird und sich die gewünschte Schichtdicke allein aufgrund der gewählten Viskosität und der gewählten Drehzahl einstellt.

Beim eben beschriebenen Ausführungsbeispiel wurde davon ausgegangen, daß sofort die schichtbildende Flüssigkeit auf die Substratplatte 11 aufgesprüht wird. Es ist jedoch auch möglich, zunächst ein Benetzungsmittel aufzusprühen, vorzugsweise das Lösungsmittel, in dem auch die schichtbildende Substanz gelöst ist. Durch Aufsprühen des Lösungsmittels wird die Substratoberfläche benetzt und gereinigt. Bevor das Lösungsmittel ganz verdunstet ist, wird die schichtbildende Flüssigkeit entsprechend dem herkömmlichen Spincoat-Verfahren aufgebracht. Auch in diesem Fall kann die Drehzahl sehr schnell erhöht werden, da durch die bereits vorbenetzte Oberfläche gewährleistet ist, daß sich die schichtbildende Flüssigkeit sehr gut über die gesamte Substratoberfläche verteilt.

Das letztgenannte Verfahren ist jedoch nur dann von Vorteil, wenn damit zu rechnen ist, daß Substrate in der Zwischenzeit zwischen dem vorigen Fertigungsschritt und dem aktuellen Fertigungsschritt relativ stark verschmutzt sind, was jedoch üblicherweise nicht der Fall ist. Vorteilhafterweise wird also das Benetzen unmittelbar durch die schichtbildende Flüssigkeit erfolgen. Dies führt nicht nur zu absoluter Sicherheit der vollständigen Benetzung der Substratoberfläche, sondern auch zu besonders hoher Taktzeit dieses Fertigungsschrittes.

Nach dem Abschleudern wird die mit der Flüssigkeit beschichtete Substratplatte in üblicher Art und Weise weiterverarbeitet, also getrocknet und erwärmt oder belichtet, um die aufgebrachte Substanz auszuhärten.

## Patentansprüche

1. Verfahren zum Aufbringen einer dünnen Schicht auf eine Substratplatte (11) für einen flachen Anzeigeschirm, bei welchem Verfahren
- die Substratplatte (11) so auf einem Drehteller (10) angeordnet ist, daß ihr Schwerpunkt im wesentlichen mit der Drehachse des Drehtellers (10) zusammenfällt,
- die aufzubringende Substanz in flüssiger Form auf die Substratplatte (11) aufgegeben wird,
- überflüssige flüssige Substanz durch Abschleudern von der Substratplatte (11) entfernt wird und
- die verteilte Substanz ausgehärtet wird,
**dadurch gekennzeichnet,**
daß vor dem Schleudern die gesamte Substratoberfläche mit der aufzubringenden Substanz benetzt wird.

2. Verfahren zum Aufbringen einer dünnen Schicht auf eine Substratplatte (11) für einen flachen Anzeigeschirm, bei welchem Verfahren
- die Substratplatte (11) so auf einem Drehteller angeordnet ist, daß ihr Schwerpunkt im wesentlichen mit der Drehachse des Drehtellers (10) zusammenfällt,
- die aufzubringende Substanz in flüssiger Form auf die Substratplatte (11) aufgegeben wird,
- die überflüssige flüssige Substanz durch Abschleudern von der Substratplatte (11) entfernt wird, und
- die verteilte Substanz ausgehärtet wird,
**dadurch gekennzeichnet,**
daß vor dem Schleudern die gesamte Substratoberfläche mit einem Benetzungsmittel benetzt wird und die aufzubringende Substanz aufgegeben und abgeschleudert wird bevor das Benetzungsmittel verdunstet ist.

3. Verfahren nach einem der Ansprüche 1 oder 2,
**dadurch gekennzeichnet,**
daß das Benetzen durch Aufsprühen erfolgt.

## Claims

1. Method for depositing a thin layer on a substrate sheet (11) for a flat display screen, in which method
- the substrate sheet (11) is arranged on a turntable (10) in such a way that its centre of gravity essentially coincides with the axis of rotation of the turntable (10),
- the substance to be deposited on the substrate sheet (11) is applied in the liquid state,
- the excess liquid substance is removed from the substrate sheet (11) by spinning,
- the distributed substance is cured,
characterised in that prior to the spinning step the entire substrate surface is wetted with the substance to be deposited.

2. Method for depositing a thin layer on a substrate sheet (11) for a flat display screen, in which method
- the substrate sheet (11) is arranged on a turntable in such a way that its centre of gravity essentially coincides with the axis of rotation of the turntable (10),
- the substance to be deposited on the substrate sheet (11) is applied in the liquid state,
- the excess liquid substance is removed from the substrate sheet (11) by spinning,
- the distributed substance is cured,
characterised in that prior to the spinning step the entire substrate surface is wetted with a wetting agent and that the substance to be deposited is applied and spun off before the wetting agent has evaporated.

3. Method according to claim 1 or 2, characterised in that the wetting is effected by spraying.

## Revendications

1. Procédé pour application d'une couche mince sur une plaque de substrat (11) pour un écran d'affichage plat, procédé dans lequel
- la plaque de substrat (11) est disposée sur un plateau tournant (10), de telle sorte que son centre de gravité coïncide essentiellement avec l'axe de rotation du plateau tournant (10),
- la substance à appliquer est placée sous forme liquide sur la plaque de substrat (11),
- la substance liquide superflue est enlevée de la plaque de substrat (11) par centrifugation, et
- la substance répartie est durcie par précipitation,
**caractérisé en ce que**
avant la centrifugation, toute la surface de substrat est humectée avec la substance à appliquer.

2. Procédé pour application d'une couche mince sur une plaque de substrat (11) pour un écran d'affichage plat, procédé dans lequel
- la plaque de substrat (11) est disposée sur un plateau tournant, de telle sorte que son centre de gravité coïncide essentiellement avec l'axe de rotation du plateau tournant (10),
- la substance à appliquer est placée sous forme liquide sur la plaque de substrat (11),
- la substance liquide superflue est enlevée de la plaque de substrat (11) par centrifugation, et
- la substance répartie est durcie par précipitation,
**caractérisé en ce que**
avant la centrifugation, toute la surface de substrat est humectée avec un produit d'humidification et que la substance adéquate est appliquée et centrifugée avant que le produit d'humidification se soit volatilisé.

3. Procédé selon l'une des revendications 1 ou 2, **caractérisé en ce que** l'humidification se fait par aspersion.
